# FASCICULE DE BREVET EUROPEEN

(11) **EP 3 097 016 B1**
(45) Date de publication et mention de la délivrance du brevet: **22.11.2017**
(21) Numéro de dépôt: 15706048.4
(22) Date de dépôt: 21.01.2015
(51) Int. Cl.: B64D 11/02, F04B 43/02, F04B 43/04

(54) **PROCÈDE ET SYSTÈME DE GESTION DES EAUX GRISES D'UN AÉRONEF**
VERFAHREN UND SYSTEM ZUR VERWALTUNG VON GRAUWASSER IN EINEM FLUGZEUG
METHOD AND SYSTEM FOR MANAGING THE GREY WATER IN AN AIRCRAFT

(30) Priorité: 21.01.2014 US 201461929632 P; 15.10.2014 US 201414515314
(43) Date de publication de la demande: 30.11.2016
(73) Titulaire: MAG Aerospace Industries, LLC, Carson CA 90746 (US)
(72) Inventeur: BOODAGHIANS, Razmik, Glendale, California 91214 (US); HUANG, Kevin, Los Angeles, CA 90006 (US); ORTOLAN, Christina, Long Beach, CA 90814 (US)
(74) Mandataire: Cabinet Laurent & Charras
(86) Numéro de dépôt international: PCT/IB2015/000054
(87) Numéro de publication internationale: WO 2015/110898

(56) Documents cités:
- WO-A2-2012/141515
- DE-U1- 9 114 232
- US-A1- 2009 092 505
- US-A1- 2013 305 444

## Description

### DOMAINE TECHNIQUE

La présente invention concerne un procédé d'évacuation des eaux usées contenues dans un réservoir de rétention d'eau d'un système de gestion des eaux grises de toilettes d'un aéronef, ainsi qu'un système de gestion des eaux grises d'un aéronef.

### ART ANTÉRIEUR

Dans le domaine de l'aéronautique notamment, il est bien connu des toilettes dites à vide afin de chasser les déchets dans une fosse septique. L'eau utilisée dans ces toilettes à vide provient généralement des eaux grises issues des lavabos ou de l'office de l'avion afin de limiter la quantité d'eau embarquée et, in fine, le poids de l'avion. On entend par office, le compartiment spécial de l'avion servant à la présentation des repas. Par ailleurs, on entend par « eaux grises » des eaux usées peu chargées en matières polluantes telles que des eaux d'origines domestique résultant du lavage de la vaisselle ou des mains notamment.

Ainsi, le système de gestion des eaux grises comportent usuellement un lavabo, un robinet d'alimentation en eau dudit lavabo, une évacuation des eaux usées du lavabo connectée à un réservoir de rétention muni d'un filtre, une cuvette alimentée en eau par une pompe connectée au réservoir de rétention. Le système comporte également un réservoir principal des eaux usées, la cuvette et le réservoir de rétention étant connectés audit réservoir principal par des conduites respectivement munies d'une vanne et d'une électrovanne. Systèmes et procédés de gestion des eaux grises de toilettes d'un aéronef sont connus des documents US 2013/0305444 A1 et WO 2012/141515 A2. Les pompes utilisées dans ces systèmes de gestion des eaux grises consistent dans des pompes dites roto-dynamiques, telles que des turbopompes et/ou des pompes volumétriques par exemple, alimentées par une énergie électrique ou hydraulique.

Les pompes roto-dynamiques les plus utilisées dans les systèmes de gestion des eaux grises sont les turbopompes, aussi appelées pompes centrifuges, qui comprennent un corps de pompe constitué principalement d'une tubulure d'aspiration, d'une volute, et d'une tubulure de refoulement. La volute reçoit la partie mobile ou rotor qui est formée de l'impulseur, ledit impulseur se présente sous la forme d'une roue à aubes, montée sur un arbre. Le rotor est actionné par une machine d'entraînement qui peut être un moteur électrique ou hydraulique ou thermique ou une turbine.

Ce type de pompes présente de nombreux inconvénients. En effet, d'une manière générale, ce type de pompes présente un mauvais rendement énergétique, de l'ordre de 30 à 70%, un encombrement et un poids important, une usure importante des pièces en rotation induisant une maintenance fréquente et une sensibilité au phénomène de cavitation. La cavitation est un phénomène bruyant, qui peut détruire une machine en quelques minutes. Lors du pompage, le liquide situé à l'intérieur d'une pompe centrifuge ne possède pas une pression uniforme. Il s'y trouve notamment des zones présentant des dépressions plus ou moins accentuées. Lorsque le liquide pompé est suffisamment proche de son point d'ébullition, c'est-à-dire du point de passage de l'état liquide à l'état gazeux, il peut se produire que la pression en ces points tombe en deçà de sa tension de vapeur, de sorte qu'il se forme dans la pompe des bulles de vapeur. Lorsque ces bulles parviennent dans des zones où la pression remonte, elles implosent soudainement. L'implosion est accompagnée de bruit et, dans le cas où elle se produit au voisinage d'une paroi, elle est susceptible d'y occasionner des dégâts mécaniques en provoquant des micro-perforations du métal (érosion).

Les autres pompes utilisées dans les systèmes de gestion des eaux grises sont les pompes à effet Venturi ; toutefois, ces pompes à effet venturi nécessitent l'utilisation d'un autre type de pompe pour générer la pression motrice, ce qui grève le poids de l'ensemble. De plus ces pompes présentent un rendement énergétique très faible, de l'ordre de 10 à 25%, et sont sensibles au phénomène de cavitation.

Les phénomènes de cavitation sont très pénalisant pour les équipements dits « sensibles » à ce phénomène car ils génèrent une dégradation mécanique des équipements, une dégradation du rendement, du bruit et dans certains cas une introduction de bulles de gaz qui peut-être problématique pour les équipements.

Il existe donc un vrai besoin d'un système de gestion des eaux grises ayant un bon rendement énergétique, un faible encombrement et un faible poids, nécessitant une maintenance réduite et n'étant pas sensible au phénomène de cavitation susceptible d'apparaître en fonction des conditions de vol notamment.

De plus, il apparait également que les pompes utilisées dans les systèmes de gestion des eaux grises de l'état de la technique sont plus sensibles à la pollution des eaux grises. Dans l'application concernée, relative notamment à la gestion des eaux grises dans un aéronef, lesdites pompes de l'état de la technique sont sujettes aux problèmes de bouchage lorsque les eaux grises à pomper sont trop sales ou trop chargées en corps étrangers et/ou matières organiques. Lesdites pompes sont trop sensibles à la taille des déchets ou corps étrangers présents dans les eaux grises à pomper.

### EXPOSE DE L'INVENTION

L'un des buts de l'invention est donc de remédier à ces inconvénients en proposant un procédé d'évacuation des eaux usées contenues dans un réservoir de rétention d'eau d'un système de gestion des eaux grises de toilettes d'un aéronef nécessitant une maintenance réduite et n'étant ni sensible au phénomène de cavitation, ni à la quantité et à la taille des déchets ou corps étrangers potentiellement présents dans lesdites eaux grises.

Afin de résoudre les problèmes précités, il a été mis au point un procédé d'évacuation des eaux usées contenues dans un réservoir de rétention d'eau d'un système de gestion des eaux grises de toilettes d'un aéronef selon la revendication 1. De même, l'invention a pour but de fournir un système de gestion des eaux grises nécessitant aussi une maintenance réduite, et n'étant pas non plus sensible au phénomène de cavitation.

Un autre objectif de l'invention est de fournir un système de gestion des eaux grises qui ne soit pas sensible à la quantité et à la taille des déchets ou corps étrangers potentiellement présents dans lesdites eaux grises.

A cet effet, il a été mis au point un système de gestion des eaux grises de toilettes d'un aéronef selon la revendication 2. Par rapport aux systèmes de gestion des eaux grises de l'art antérieur, on obtient une maintenance réduite due à l'absence de pièces tournantes dans la pompe à membrane, et une grande tolérance aux phénomènes de cavitation et de pollution. De plus, la mise en oeuvre du système de gestion des eaux grises est facilité puisque la pompe à membrane permet un auto-amorçage de la pompe.

De préférence, la pompe présente un corps cylindrique, délimitant une chambre cylindrique dans laquelle débouchent la conduite d'admission et la conduite d'échappement coaxiale. La membrane ondulante comporte une ouverture centrale s'étendant au droit de la conduite d'échappement.

Ainsi, selon plusieurs variantes d'exécution, la conduite d'admission de la pompe à membrane s'étend soit radialement par rapport au corps de pompe, soit du côté opposé à la conduite d'échappement et coaxialement à cette dernière.

Par ailleurs, la conduite d'admission de la pompe à membrane se présenter sous la forme d'une pluralité d'évents pratiqués dans le corps de pompe cylindrique pour mettre en communication la chambre cylindrique avec l'extérieur de la pompe.

Accessoirement, la conduite d'admission et/ou la conduite d'échappement de la pompe à membrane comporte au moins un filtre.

Avantageusement, la pompe à membrane du système de gestion selon l'invention comporte au moins un capteur, tel qu'un capteur de pression et/ou un capteur de température et/ou un capteur de présence d'eau grise.

### DESCRIPTION SOMMAIRE DES FIGURES

D'autres avantages et caractéristiques ressortiront mieux de la description qui va suivre, de plusieurs variantes d'exécution, données à titre d'exemples non limitatifs, de la pompe et du système de gestion des eaux grises suivant l'invention, à partir des dessins annexés sur lesquels :
- la figure 1 est une représentation schématique du système de gestion des eaux grises conforme à l'invention,
- la figure 2 est une vue de côté d'une première variante d'exécution de la pompe du système de gestion des eaux grises conforme à l'invention,
- la figure 3 est une vue de côté d'une seconde variante d'exécution de la pompe du système de gestion des eaux grises conforme à l'invention,
- la figure 4 est une vue de côté d'une troisième variante d'exécution de la pompe du système de gestion des eaux grises conforme à l'invention,
- la figure 5 est une représentation schématique illustrant, de côté, l'intérieur d'une quatrième variante d'exécution de la pompe du système de gestion des eaux grises conforme à l'invention,
- la figure 6 est une représentation schématique illustrant, de côté, l'intérieur d'une cinquième variante d'exécution de la pompe du système de gestion des eaux grises conforme à l'invention,
- la figure 7 est une représentation schématique illustrant, de côté, l'intérieur d'une sixième variante d'exécution de la pompe du système de gestion des eaux grises conforme à l'invention,
- la figure 8 est une représentation schématique illustrant, de côté, l'intérieur d'une septième variante d'exécution de la pompe du système de gestion des eaux grises conforme à l'invention,
- la figure 9 est une représentation graphique de la distribution des tailles des particules des eaux grises entraînées par la pompe du système de gestion des eaux grises suivant l'invention.

### DESCRIPTION DÉTAILLÉE DE L'INVENTION

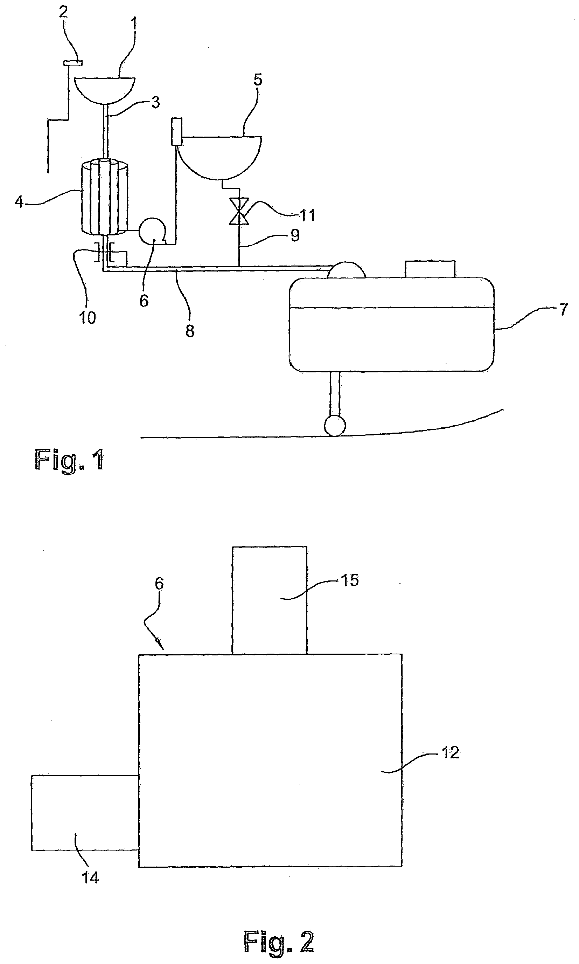

En référence à la figure 1, le système de gestion des eaux grises d'un aéronef comporte un lavabo (1), un robinet (2) d'alimentation en eau dudit lavabo (1), une évacuation (3) des eaux usées du lavabo connectée à un réservoir de rétention (4) muni d'un filtre, une cuvette (5) reliée au réservoir de rétention (4). Le système comporte également un réservoir principal (7) des eaux usées, la cuvette (5) et le réservoir de rétention (4) sont connectés audit réservoir principal (7) par des conduites (8,9) respectivement munies d'une vanne (10) et d'une électrovanne (11).

Conformément à l'intention, le système comprend une pompe à membrane ondulante (6) comprenant une conduite d'admission (14) connectée au réservoir de rétention (4) et une conduite d'échappement (15) connectée à la cuvette (5). La membrane de la pompe (6) est apte à onduler, sous l'action de moyens d'actionnement (16), pour évacuer lesdites eaux usées présentes dans le réservoir de rétention (4) à travers la conduite d'admission (14) de la pompe (6) jusqu'à la conduite d'échappement (15) de la pompe (6) pour alimenter la cuvette (5) en eaux usées, notamment issues du lavabo.

Selon trois variantes d'exécution de la pompe du système de gestion des eaux grises conforme à l'invention, et en référence aux figures 2 à 4, la pompe à membrane (6) du système de gestion des eaux usées comprend un corps de pompe cylindrique (12) délimitant une chambre cylindrique dans laquelle débouche une conduite d'admission (14) et une conduite d'échappement (15) coaxiale au corps de pompe (12), une membrane ondulante comportant une ouverture centrale et s'étendant dans la chambre cylindrique entre un flasque inférieur fixe et un flasque supérieur fixe, lesdits flasques s'étendant dans ladite chambre cylindrique.

La membrane ondulante présente une forme d'un disque comportant une ouverture centrale circulaire. La membrane ondulante est obtenue dans un matériau déformable tel qu'un élastomère silicone par exemple ou similaire. L'épaisseur de la membrane ondulante est croissante depuis sa partie centrale vers son bord périphérique, et l'ouverture centrale circulaire présente un diamètre sensiblement égal au diamètre interne de la conduite d'échappement (15).

Le flasque inférieur est solidaire de la paroi de fond du corps (12) de la pompe (6) et le flasque supérieur est apte à être déplacé verticalement afin de faire varier la cylindrée de la pompe comme il sera détaillé plus loin. Par ailleurs, les parois des flasques inférieur et supérieur faisant droit à la membrane sont convexes.

De plus, la pompe (6) comprend des moyens de support rigides de la membrane entre les flasques inférieur et supérieur. Lesdits moyens de support coopèrent notamment avec le bord périphérique de la membrane. Ces moyens de support consistent, par exemple, en une couronne annulaire portant le bord périphérique de la membrane.

Par ailleurs, la pompe (6) comporte des moyens d'actionnement de la membrane ondulante coopérant avec les moyens de support de cette dernière. Lesdits moyens d'actionnement consistent, par exemple, dans un actionneur linéaire électromagnétique et des moyens d'amortissement qui délimitent la course de l'actionneur électromagnétique.

L'actionneur électromagnétique consiste, quant à lui, dans un anneau cylindrique mobile s'étendant coaxialement à la conduite d'échappement (15) au-dessus du flasque supérieur et au droit d'un moteur d'excitation. Le moteur d'excitation est constitué d'une armature cylindrique fixe dite interne et d'une armature cylindrique fixe dite externe portant une bobine annulaire et deux aimants permanents annulaires s'étendant au-dessus et respectivement en dessous de la bobine annulaire, ladite bobine annulaire est connectée à un circuit d'alimentation. Le circuit d'alimentation comprend, par exemple, au moins un amplificateur de puissance et un générateur de signal.

L'extrémité inférieure de l'anneau cylindrique mobile est solidaire d'une couronne annulaire munie d'un épaulement, et en prise avec une pièce de liaison solidaire de la couronne de support de la membrane ondulante. Ainsi, la pièce de liaison maintient la membrane ondulante lorsque l'actionneur est au repos notamment.

De plus, de manière avantageuse, le flasque supérieur est solidaire d'un chariot apte à coulisser verticalement par rapport à l'armature fixe interne afin de faire varier la cylindrée de ladite pompe (6). Ledit chariot consiste, par exemple, dans une pièce circulaire comportant un évidement central pour le passage de la conduite d'échappement (15) et des trous dans lesquels s'étendent des guides solidaires de l'armature fixe interne. Afin de faire varier la position dudit chariot, ce dernier comporte un taraudage coopérant avec une vis s'étendant dans un trou pratiqué dans l'armature fixe interne. La vis consiste dans une pièce tubulaire de section transversale circulaire comportant un filetage sur sa paroi externe, dans sa partie inférieure.

Le flasque supérieur est solidaire de la face inférieure dudit chariot de sorte que, en faisant varier la position dudit chariot le long de l'axe de révolution vertical de la pompe (6), il est possible de faire varier la cylindrée de la pompe en fonction du besoin de l'application visée.

Accessoirement, la conduite d'admission (14) et/ou la conduite d'échappement (15) pourront comporter au moins un filtre.

De plus, la pompe suivant l'invention pourra avantageusement comporter au moins un capteur tel qu'un capteur de pression et/ou un capteur de température et/ou un capteur de présence d'eaux usées. Les informations mesurées par ces capteurs peuvent être transmises au circuit d'alimentation qui pourra comporter des moyens de gestion pour réguler le débit en fonction desdites informations en modifiant les caractéristiques d'alimentation de l'actionneur linéaire électromagnétique notamment.

Ainsi, lorsque l'actionneur linéaire électromagnétique est activé, l'anneau cylindrique mobile est déplacé alternativement vers le bas et vers le haut, entraînant la membrane ondulante vers le bas et respectivement vers le haut à la fréquence alimentant l'actionneur linéaire électromagnétique. De cette manière, la membrane propage un front d'ondes qui procure le déplacement des eaux usées présentes dans la chambre cylindrique vers la conduite d'échappement (15).

Plusieurs variantes d'exécution sont possibles pour l'agencement de la conduite d'admission (14) par rapport au corps de pompe (12). En effet, et selon une première variante illustrée à la figure 2, la conduite d'admission (14) de la pompe à membrane (6) s'étend radialement par rapport au corps de pompe (6).

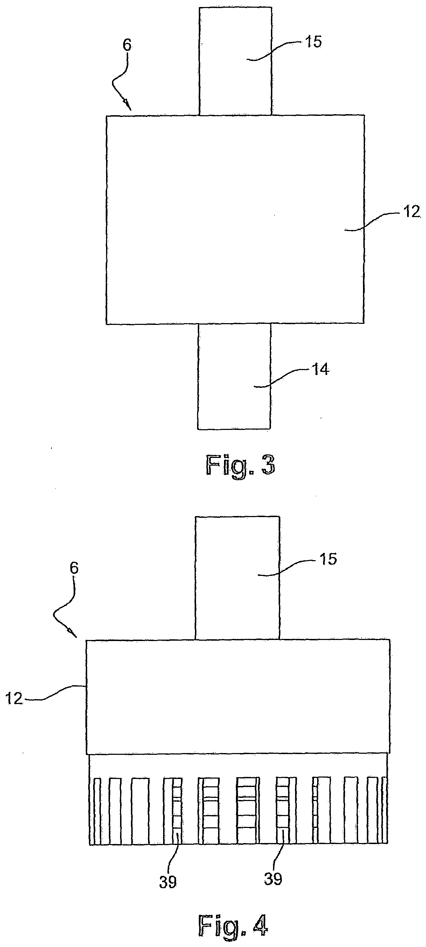

Selon une deuxième variante illustrée à la figure 3, la conduite d'admission (14) s'étend du côté opposé à la conduite d'échappement (15), et coaxialement à cette dernière.

Enfin, selon une troisième variante illustrée à la figure 4, la conduite d'admission (14) de la pompe à membrane (6) se présente sous la forme d'une pluralité d'évents (39) pratiqués dans le corps (12) de pompe cylindrique (6) pour mettre en communication la chambre cylindrique avec l'extérieur de la pompe (6). Dans cet exemple particulier de réalisation, lesdits évents (39) consistent dans des fentes longitudinales uniformément réparties sur la circonférence du corps de pompe cylindrique (12) et s'étendent sur la totalité de la hauteur de la chambre cylindrique.

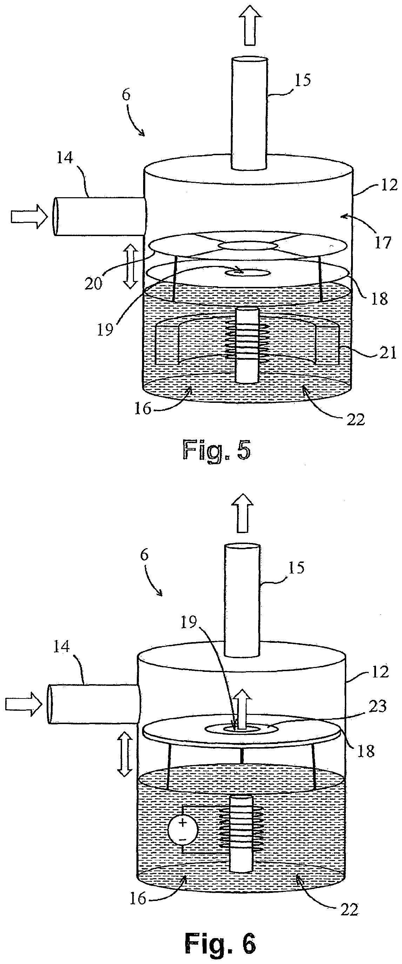

En référence à la figure 5 illustrant une quatrième variante d'exécution de la pompe à membrane (6) du système de gestion des eaux usées, celle-ci comprend de la même manière que précédemment, un corps de pompe cylindrique (12) délimitant une chambre cylindrique (17) dans laquelle débouche une conduite d'admission radiale (14) et une conduite d'échappement (15) coaxiale au corps de pompe (12). Une membrane ondulante (18) est agencée dans la chambre cylindrique (17) et se présente sous la forme d'un disque comportant une ouverture centrale circulaire (19) présentant un diamètre sensiblement égal au diamètre interne de la conduite d'échappement (15). La membrane ondulante (18) est assujettie à une structure mobile (20) reliée à un aimant mobile (21) d'un électro-aimant (22). Ainsi, lorsque l'électro-aimant (22) est alimenté en courant électrique, l'aimant mobile (20) oscille et provoque l'oscillation de la structure mobile (21) et donc de la membrane ondulante (18). L'oscillation de la membrane ondulante (18) permet de générer un front d'onde provoquant la circulation du flux d'eaux usées au travers de la pompe (6). La structure mobile, aussi sous la forme d'un disque permet également de protéger la membrane ondulante (18).

Selon une cinquième variante d'exécution de la pompe à membrane (6) illustrée à la figure 6, celle-ci comprend de la même manière que précédemment, un corps de pompe cylindrique (12) délimitant une chambre cylindrique (17) dans laquelle débouche une conduite d'admission radiale (14) et une conduite d'échappement (15) coaxiale au corps de pompe (12). Une membrane ondulante (18) est agencée dans la chambre cylindrique (17) et se présente sous la forme d'un disque comportant une ouverture centrale circulaire (19) présentant un diamètre sensiblement égal au diamètre interne de la conduite d'échappement (15).

La membrane ondulante est assujettie à un électro-aimant (22) qui, lorsqu'il est activé par une source électrique change sa polarisation pour attirer et repousser un disque magnétique (23) agencé au centre de la membrane ondulante (18), autour de l'ouverture circulaire (19). Le mouvement de la membrane ondulante (18) provoque la circulation des eaux usées au travers de la pompe (6).

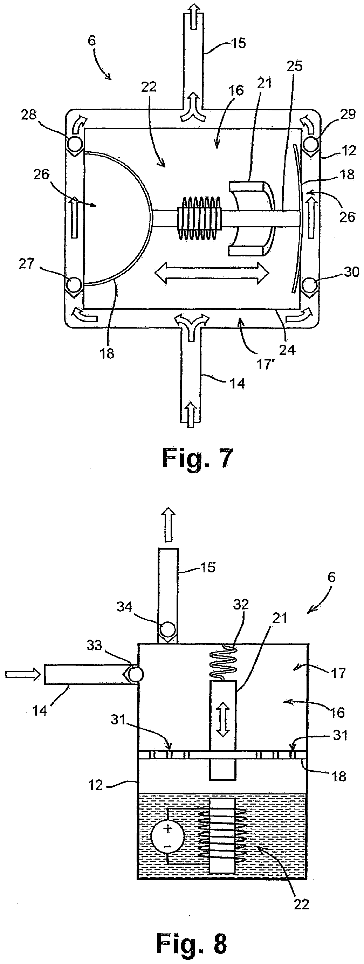

Selon une sixième variante d'exécution de la pompe à membrane (6) illustrée à la figure 7, celle-ci comprend un corps de pompe cylindrique (12) à l'intérieur duquel est agencé un second corps cylindrique (24) de manière à délimiter entre les deux corps cylindriques (12, 24), une chambre annulaire (17') dans laquelle débouche une conduite d'admission coaxiale (14) et une conduite d'échappement (15) coaxiale au corps de pompe (12).

Le second corps cylindrique (24) comprend un électro-aimant (22) comprenant un axe (25) agencé perpendiculairement aux conduites d'admission (14) et d'échappement (15) et assujetti à un aimant mobile (21). Lorsque l'électro-aimant (22) est alimenté en courant électrique, l'aimant mobile (21) oscille et provoque l'oscillation de l'axe (25). Chaque extrémité de l'axe (25) comprend une membrane ondulante (18) montée, en communication avec la chambre annulaire (17'), pour obturer une ouverture (26) dans le second corps cylindrique (24).

La chambre annulaire (17') comprend des clapets anti-retour (27, 28, 29, 30) agencés de part et d'autre des ouvertures (26) ménagées dans le second corps cylindrique (24). Ces clapets anti-retour (27, 28, 29, 30) autorisent ou interdisent l'écoulement des eaux usées provenant de la conduite d'admission (14) jusqu'à la conduite d'échappement (15). La pompe à membrane (6) comprend donc quatre clapets anti-retour, positionnés dans le même sens de fonctionnement.

Ainsi, lorsque l'électro-aimant (22) est activé par une source électrique, l'axe (25) oscille latéralement et entraine le pompage des eaux usées au travers de la pompe (6). En effet, lesdits clapets anti-retour (27, 28, 29, 30) sont positionnés de sorte que lorsque l'axe (25) se déplace latéralement vers la droite, la membrane ondulante (18) agencée à l'extrémité droite de l'axe (25) pousse le volume d'eaux usées présent dans la chambre annulaire (17'), entre les deux clapets (29, 30) correspondants, et entraine l'ouverture du clapet (29) en communication avec la conduite d'échappement (15) et la fermeture du clapet (30) en communication avec la conduite d'admission (14). Le volume d'eaux usées présent entre les deux clapets (29, 30) est ainsi évacué par la conduite d'échappement (15).

En parallèle, le déplacement latéral vers la droite de l'axe (25) entraine le déplacement de la membrane ondulante (18) agencée à l'extrémité gauche de l'axe (25). Ladite membrane ondulante (18) créée un phénomène d'aspiration entrainant la fermeture du clapet (28) en communication avec la conduite d'échappement (15) et l'ouverture du clapet (27) en communication avec la conduite d'admission (14). Cette aspiration permet de remplir d'eaux usées le volume présent dans la chambre annulaire (17'), entre les deux clapets (27, 28) correspondants. Ce volume rempli est évacué par la conduite d'échappement (15) lorsque l'axe (25) est déplacé latéralement vers la gauche, et ainsi de suite. La circulation du flux d'eaux usées est alternée et continue.

Enfin, selon une septième variante d'exécution de la pompe à membrane (6) illustrée la figure 8, celle-ci comprend un corps de pompe cylindrique (12) délimitant une chambre cylindrique (17) dans laquelle débouche une conduite d'admission radiale (14) et une conduite d'échappement (15) coaxiale au corps de pompe (12), et une membrane ondulante (18) sous la forme d'un disque comportant une pluralité d'orifices (31). La membrane ondulante (18) s'étend dans la chambre cylindrique (17).

La membrane ondulante (18) est rendue solidaire d'un aimant permanent (21). Un électro-aimant (22) est agencé dans la chambre cylindrique (17) et, lorsqu'il est activé par une source électrique, change sa polarisation pour attirer et repousser l'aimant permanent (21) monté sur un ressort (32). Le mouvement d'oscillation de l'aimant permanent (21) entraine l'oscillation ou l'ondulation de la membrane ondulante (18) et provoque le pompage des eaux usées au travers de la pompe (6).

En effet, les conduites d'admission (14) et d'échappement (15) comprennent des clapets anti-retour (33, 34) agencés dans la même sens de fonctionnement de sorte que lorsque la membrane ondulante (18) pousse le volume d'eaux usées en direction de la conduite d'échappement (15), le clapet anti-retour (34) de la conduite d'échappement (15) s'ouvre pour laisser s'échapper ledit volume, et le clapet anti-retour (33) de la conduite d'admission (14) se ferme. A l'inverse, lorsque la membrane ondulante (18) oscille dans l'autre sens, la conduite d'admission (14) est ouverte et un volume d'eaux usées est aspiré à l'intérieur de la chambre cylindrique (17), et le clapet anti-retour (34) de la conduite d'échappement (15) est fermé.

En résumé, le système de gestion des eaux usées intègre une pompe à membrane (6) à déplacement positif qui utilise la membrane en mouvement alternatif, dans laquelle les eaux grises sont déplacées par le piégeage d'une quantité fixe d'eau grise, et en forçant le déchargement du volume emprisonné par la conduite d'échappement (15).

La pompe à membrane (6) comprend donc de bonnes propriétés d'aspiration et peut pomper des liquides relativement sales avec une quantité relativement élevée de grain et de contenu solide, jusqu'à même de petits objets qui pourraient tomber dans le lavabo (1) et être transportés par l'eau, comme par exemple un morceau de papier ou un anneau métallique.

La seule pièce mobile avec laquelle les eaux grises sont en contact dans la pompe est la membrane en élastomère. Tous les composants mécaniques et électriques sont isolés de l'exposition aux eaux grises. Cela permet de minimiser le risque de piégeage de corps étranger et maximiser la fiabilité du système de gestion des eaux usées selon l'invention.

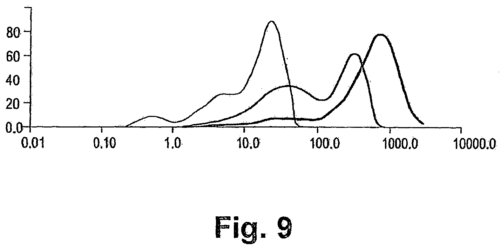

Le système de gestion des eaux usées selon l'invention n'est donc pas sensible à la quantité et à la taille des déchets ou corps étrangers potentiellement présents dans les eaux grises, tel qu'illustré à la figure 9 représentant un graphique de la distribution des tailles des particules des eaux grises entraînées par la pompe du système de gestion des eaux grises suivant l'invention.

Il va de soi que la forme de la pompe ne limite pas l'invention, ledit corps de pompe (12), la chambre et la membrane pourront présenter une forme quelconque, telle qu'une forme parallélépipédique pour le corps de pompe (12) et la chambre, et une forme rectangulaire pour la membrane sans pour autant sortir du cadre de l'invention. L'essentiel réside dans l'utilisation avantageuse d'une pompe à membrane dans la gestion des eaux usées des toilettes d'un aéronef.

Enfin, il est bien évident que les exemples que l'on vient de donner ne sont que des illustrations particulières et en aucun cas limitatifs quant au domaine d'application de l'invention.

## Revendications

1. Procédé d'évacuation des eaux usées contenues dans un réservoir de rétention (4) d'eau d'un système de gestion des eaux grises de toilettes d'un aéronef, ***caractérisé* en ce qu'**il consiste à évacuer les eaux usées par l'intermédiaire d'une pompe à membrane ondulante (6) comprenant une conduite d'admission (14) connectée audit réservoir de rétention (4), la membrane (18) de la pompe (6) étant apte à onduler, sous l'action d'un actionneur linéaire électromagnétique et de moyens d'amortissement qui délimitent la course de l'actionneur électromagnétique, pour évacuer lesdites eaux usées présentes dans le réservoir de rétention (4) à travers la conduite d'admission (14) de la pompe (6) jusqu'à une conduite d'échappement (15) de la pompe (6).

2. Système de gestion des eaux grises de toilettes d'un aéronef comprenant un lavabo (1), un robinet d'alimentation (2) en eau dudit lavabo (1), une évacuation (3) des eaux usées du lavabo (1) connectée à un réservoir de rétention (4) muni d'un filtre, une cuvette (5) reliée au réservoir de rétention (4), et un réservoir principal (7) des eaux usées, la cuvette (5) et le réservoir de rétention (4) étant connectés audit réservoir principal (7) par des conduites (8,9), ***caractérisé* en ce qu'**il comprend une pompe à membrane ondulante (6) comprenant une conduite d'admission (14) connectée au réservoir de rétention (4) et une conduite d'échappement (15) connectée à la cuvette (5), la membrane (18) de la pompe (6) étant apte à onduler, sous l'action d'un actionneur linéaire électromagnétique et des moyens d'amortissement qui délimitent la course de l'actionneur électromagnétique, pour évacuer lesdites eaux usées présentes dans le réservoir de rétention (4) à travers la conduite d'admission (14) de la pompe (6) jusqu'à la conduite d'échappement (15) de la pompe (6) pour alimenter la cuvette (5) en eaux usées.

3. Système de gestion des eaux grises selon la revendication 2, ***caractérisé* en ce que** la pompe (6) présente un corps cylindrique (12), délimitant une chambre cylindrique dans laquelle débouchent la conduite d'admission (14, 39) et la conduite d'échappement (15) coaxiale, la membrane ondulante comportant une ouverture centrale s'étendant au droit de la conduite d'échappement (15).

4. Système de gestion des eaux grises selon la revendication 3 ***caractérisé* en ce que** la conduite d'admission (14) de la pompe à membrane (6) s'étend radialement par rapport au corps de pompe (12).

5. Système de gestion des eaux grises selon la revendication 3 ***caractérisé* en ce que** la conduite d'admission (14) de la pompe à membrane (6) s'étend du côté opposé à la conduite d'échappement (15) coaxialement à cette dernière.

6. Système de gestion des eaux grises selon la revendication 3 ***caractérisé* en ce que** la conduite d'admission (14) de la pompe à membrane (6) se présente sous la forme d'une pluralité d'évents (39) pratiqués dans le corps de pompe cylindrique (12) pour mettre en communication la chambre cylindrique (13) avec l'extérieur de la pompe (6).

7. Système de gestion des eaux grises selon l'une quelconque des revendications 2 à 6 ***caractérisé* en ce que** la conduite d'admission (14) et/ou la conduite d'échappement (15) de la pompe à membrane (6) comporte au moins un filtre.

8. Système de gestion des eaux grises selon l'une quelconque des revendications 2 à 7 ***caractérisé*** ce que la pompe à membrane (6) comporte au moins un capteur, tel qu'un capteur de pression et/ou un capteur de température et/ou un capteur de présence d'eau grise.

9. Système selon la revendication 2, ***caractérisé* en ce que** la membrane ondulante (18) est assujettie à un électro-aimant (22) qui, lorsqu'il est activé par une source électrique, change sa polarisation pour attirer et repousser un disque magnétique (23) agencé au centre de la membrane ondulante (18), autour d'une ouverture circulaire (19).

10. Système selon la revendication 2, ***caractérisé* en ce que** la pompe à membrane (6) comprend un second corps cylindrique (24) agencé à l'intérieur du corps de pompe cylindrique (12) de manière à délimiter entre les deux corps cylindriques (12, 24), une chambre annulaire (17') dans laquelle débouche coaxialement la conduite d'admission coaxiale (14) et la conduite d'échappement (15), le second corps cylindrique (24) comprend un électro-aimant (22) comprenant un axe (25) agencé perpendiculairement aux conduites d'admission (14) et d'échappement (15) et assujetti à un aimant mobile (21), de sorte que lorsque l'électro-aimant (22) est alimenté en courant électrique, l'aimant mobile (21) oscille et provoque l'oscillation de l'axe (25) dont chaque extrémité comprend une membrane ondulante (18) montée, en communication avec la chambre annulaire (17'), pour obturer une ouverture (26) dans le second corps cylindrique (24).

11. Système selon la revendication 2, ***caractérisé* en ce que** la membrane ondulante (18) est en élastomère.

## Patentansprüche

1. Verfahren zum Ableiten von Abwässern, die in einem Wasserrückhaltebehälter (4) eines Grauwassersystems für Luftfahrzeugtoiletten enthalten sind, **dadurch *gekennzeichnet,* dass** es darin besteht, die Abwässer mittels einer Pumpe (6) mit Schwingmembran abzuleiten, welche eine Zuführungsleitung (14) umfasst, die an den Rückhaltebehälter (4) angeschlossen ist, wobei die Membran (18) der Pumpe (6) dazu geeignet ist, unter der Einwirkung eines elektromagnetischen linearen Stellorgans und von Dämpfungsmitteln, die den Hub des elektromagnetischen Stellorgans begrenzen, derart zu schwingen, dass die Abwässer, welche in dem Rückhaltebehälter (4) enthalten sind, durch die Zuführungsleitung (14) der Pumpe (6) bis zu einer Auslassleitung (15) der Pumpe (6) abgeleitet werden.

2. Grauwassersystem für Luftfahrzeugtoiletten, das ein Waschbecken (1), einen Wasserhahn (2) zur Versorgung des Waschbeckens (1) mit Wasser, einen Abfluss (3) für die Abwässer des Waschbeckens (1), welcher an einen Rückhaltebehälter (4) angeschlossen ist, der mit einem Filter versehen ist, eine Toilettenschüssel (5), welche mit dem Rückhaltebehälter (4) verbunden ist, sowie einen Hauptabwasserbehälter (7) umfasst, wobei die Toilettenschüssel (5) und der Rückhaltebehälter (4) über Leitungen (8, 9) an den Hauptbehälter (7) angeschlossen sind, **dadurch *gekennzeichnet,* dass** es eine Pumpe (6) mit Schwingmembran umfasst, welche eine Zuführungsleitung (14) umfasst, die an den Rückhaltebehälter (4) angeschlossen ist, sowie eine Auslassleitung (15), die an die Toilettenschüssel (5) angeschlossen ist, wobei die Membran (18) der Pumpe (6) dazu geeignet ist, unter der Einwirkung eines elektromagnetischen linearen Stellorgans und von Dämpfungsmitteln, die den Hub des elektromagnetischen Stellorgans begrenzen, derart zu schwingen, dass die Abwässer, welche in dem Rückhaltebehälter (4) enthalten sind, durch die Zuführungsleitung (14) der Pumpe (6) bis zur Auslassleitung (15) der Pumpe (6) abgeleitet werden, um die Toilettenschüssel (5) mit Abwässern zu versorgen.

3. Grauwassersystem nach Anspruch 2, **dadurch *gekennzeichnet,* dass** die Pumpe (6) einen zylindrischen Körper (12) aufweist, der eine zylindrische Kammer begrenzt, in welche die Zuführungsleitung (14, 39) und die koaxiale Auslassleitung (15) einmünden, wobei die Schwingmembran eine mittige Öffnung aufweist, die sich derart erstreckt, dass sie der Auslassleitung (15) gegenüberliegt.

4. Grauwassersystem nach Anspruch 3, **dadurch *gekennzeichnet,* dass** die Zuführungsleitung (14) der Membranpumpe (6) sich radial erstreckt, unter Bezugnahme auf den Pumpenkörper (12).

5. Grauwassersystem nach Anspruch 3, **dadurch *gekennzeichnet,* dass** die Zuführungsleitung (14) der Membranpumpe (6) sich auf der Seite erstreckt, welche der Auslassleitung (15) gegenüberliegt, wobei sie koaxial zu der letzteren ist.

6. Grauwassersystem nach Anspruch 3, **dadurch *gekennzeichnet,* dass** die Zuführungsleitung (14) der Membranpumpe (6) in Form mehrerer Löcher (39) vorliegt, die im zylindrischen Pumpenkörper (12) vorgesehen sind, um eine Verbindung zwischen der zylindrischen Kammer (13) und dem Außenbereich der Pumpe (6) herzustellen.

7. Grauwassersystem nach einem beliebigen der Ansprüche 2 bis 6, **dadurch *gekennzeichnet,* dass** die Zuführungsleitung (14) und/oder die Auslassleitung (15) der Membranpumpe (6) mindestens einen Filter aufweist/aufweisen.

8. Grauwassersystem nach einem beliebigen der Ansprüche 2 bis 7, **dadurch *gekennzeichnet,* dass** die Membranpumpe (6) mindestens einen Sensor aufweist, wie etwa einen Drucksensor und/oder einen Temperatursensor und/oder einen Sensor zur Meldung des Vorliegens von Grauwasser.

9. System nach Anspruch 2, **dadurch *gekennzeichnet,* dass** ein Elektromagnet (22) auf die Schwingmembran (18) einwirkt, wenn dieser von einer Stromquelle aktiviert wird und seine Polarisierung ändert, sodass er eine Magnetscheibe (23) anzieht oder abstößt, welche in der Mitte der Schwingmembran (18) angeordnet ist, rundum eine kreisförmige Öffnung (19).

10. System nach Anspruch 2, **dadurch *gekennzeichnet,* dass** die Membranpumpe (6) einen zweiten zylindrischen Körper (24) umfasst, der im Inneren des zylindrischen Pumpenkörpers (12) derart angeordnet ist, dass zwischen den beiden zylindrischen Körpern (12, 24) eine ringförmige Kammer (17') abgegrenzt wird, in welche die koaxiale Zuführungsleitung (14) und die Auslassleitung (15) koaxial einmünden, wobei der zweite zylindrische Körper (24) einen Elektromagneten (22) umfasst, der eine Achse (25) umfasst, welche rechtwinklig zu den Zuführungs- (14) und Auslassleitungen (15) angeordnet ist und auf welche ein beweglicher Magnet (21) derart einwirkt, dass bei einer Versorgung des Elektromagnets (22) mit elektrischem Strom der bewegliche Magnet (21) schwingt und die Achse (25) in Schwingung versetzt, wobei die Enden derselben jeweils eine Schwingmembran (18) umfassen, die derart angebracht ist, dass sie mit der ringförmigen Kammer (17') in Verbindung steht und eine Öffnung (26) im zweiten zylindrischen Körper (24) verschließt.

11. System nach Anspruch 2, **dadurch *gekennzeichnet,* dass** die Schwingmembran (18) aus Elastomer ist.

## Claims

1. A method of draining wastewater contained in a holding tank (4) of a system for management of grey water in aircraft toilets, ***characterised in that*** the method consists of draining the grey water through an undulating diaphragm pump (6) comprising an inlet conduit (14) connected to the said holding tank (4), the pump (6) diaphragm (18) is able to undulate, under the action of a linear electromagnetic actuator and of damping means defining the electromagnetic actuator stroke for draining the said grey water present in the holding tank (4) through the inlet conduit (14) of the pump (6) to a discharge conduit (15) of the pump (6).

2. A system for management of grey water in aircraft toilets, comprising a washbasin (1), a water supply valve (2) of the said washbasin, a wastewater drainage system (3) of the washbasin (1) connected to a holding tank (4), which is equipped with a filter, and a bowl (5) connected to the holding tank (4), and a main wastewater tank (7), the bowl (5) and the holding tank (4) being connected to the said main tank (7) by conduits (8,9), ***characterised in that*** the system comprises an undulating diaphragm pump (6) comprising an inlet conduit (14) connected to the holding tank (4) and a discharge, conduit (15) connected to the bowl (5), the pump (6) diaphragm (18) being adapted to undulate, under the action of a linear electromagnetic actuator and of damping means defining the electromagnetic actuator stroke for draining the said wastewater present in the holding tank (4) through the inlet conduit (14) of the pump (6) to the discharge conduit (15) of the pump (6) in order to supply grey water to the bowl (5).

3. System for management of grey water according to claim 2 , ***characterised in that*** the pump (6) has a cylindrical case (12), defining a cylindrical chamber into which the inlet conduit (14, 39) and the coaxial discharge conduit (15) open; the undulating diaphragm comprising a central opening that extends directly in line with the discharge conduit (15).

4. System for management of grey water according to claim 3 ***characterised in that*** the inlet conduit (14) of the diaphragm pump (6) extends radially in relation to the pump case (12).

5. System for management of grey water according to claim 3 ***characterised in that*** the inlet conduit (14) of the diaphragm pump (6) extends from the side opposite to the discharge conduit (15), coaxially in relation to the latter.

6. System for management of grey water according to claim 3 ***characterised in that*** the inlet conduit (14) of the diaphragm pump (6) is in the form of multiple vents (39) created in the cylindrical pump case (12) for connecting the cylindrical chamber (13) and the external components of the pump (6).

7. System for management of grey water according to any of the claims from 2 to 6 ***characterised in that*** the inlet conduit (14) and/or the discharge conduit (15) of the diaphragm pump (6) contains at least one filter.

8. System for management of grey water according to any of the claims from 2 to 7 ***characterised in that*** the diaphragm pump (6) comprises at least one sensor, such as a pressure sensor and/or a temperature sensor and/or a grey water sensor.

9. System according to claim 2 ***characterised in that*** the undulating diaphragm (18) is controlled by an electromagnet (22) that, while it is activated by an electricity source, changes its polarisation to attract or repel a magnetic disc (23) disposed at the centre of the undulating diaphragm (18) around circular opening (19).

10. System according to claim 2 ***characterised in that*** the diaphragm pump (6) includes a second cylindrical case (24) disposed at the interior of the cylindrical pump case (12) so as to define an annular chamber (17) between two cylindrical cases (12,24), with inlet conduit (14) and discharge conduit opening to said chamber (17), the second cylindrical case (24) comprise an electromagnet (22) comprising an axis (25) disposed perpendicularly to the inlet (14) and discharge (15) conduits and fixed to a mobile magnet (21), in such a way that, while the electromagnet (22) is powered by an electric current, mobile magnet (21) oscillate and provokes oscillation of the axis (25) each extremity thereof comprise an undulating diaphragm (18) installed, in communication with an annular chamber (17'), so as to block an opening (26) in the second cylindrical case (24).

11. System according to claim 2 ***characterised in that*** undulating diaphragm (18) is made of an elastomer.
